# EUROPEAN PATENT APPLICATION

(11) **EP 1 627 688 A1**
(43) Date of publication of application: **22.02.2006**
(21) Application number: 05107467.2
(22) Date of filing: 12.08.2005
(51) Int. Cl.: B02C 19/06, A01J 27/04

(54) **Process for manufacture of grated cheese and uses thereof**

(30) Priority: 17.08.2004 US 919518
(71) Applicant: KRAFT FOODS HOLDINGS, INC., Northfield, Illinois 60093 (US)
(72) Inventor: Shah, Manoj, Lindenhurst, Illinois 60046 (US); Delpierre III, Phillip, Gurnee, Illinois 60031 (US); Fournier, Michael R., Chicago, Illinois 60607 (US)
(74) Representative: Smaggasgale, Gillian Helen

(57) **Abstract**

Process for grinding cheese material in a short duration single unit operation. The grated cheese material obtained from the single-stage treatment of cheese material retains flavor and functional suitability for comestibles and food manufacture.

## Description

### FIELD OF THE INVENTION

The invention generally to a process for providing edible granules from cheese, and, particularly, the invention relates to providing granules from cheese in a single-unit operation.

### BACKGROUND OF THE INVENTION

Cheese is generally manufactured in relatively large blocks and cut for sale into smaller blocks or chunks of shapes and sizes selected according to consumer or customer preference. The cutting operation leaves a quantity of irregular pieces of cheese. An ongoing goal in the cheese industry is to find commercial uses for such pieces.

Cheese powders have been used in a variety of foods, including smooth sauces, snack seasonings, and free-flowing fillings. For example, consumers are familiar with shelf-stable cheese sauce powders for macaroni and cheese dinners, which can be reconstituted with milk and/or other ingredients. Grated or powdered cheeses have been manufactured by spray drying processes used on pumpable forms of cheese in accordance with well-known practices. They also have been manufactured by dehydrating cheese curd in a drum drier, and then disintegrating the dehydrated curd in a milling device. Also, grated cheeses have been made by cutting chunks or pieces of hard cheese into fine particles, and then dehydrating the fine particles. Cheese granules also have been manufactured from cheese pieces which are shredded, freeze dried, and ground in a multistep procedure. These procedures generally entail conducting multiple unit operations performed in separate pieces of equipment.

Arrangements are needed for manufacturing shelf-stable grated cheese products with fewer process steps and equipment requirements. The invention addresses the above and other needs in an efficient and economically feasible manner.

### SUMMARY OF THE INVENTION

This invention provides a process for grinding cheese into grated form in a single unit operation. This process preferably combines and executes this operation in a short duration operation that substantially preserves desirable functional attributes and flavor of the cheese.

In one embodiment, wet cheese material is grated in a combined heat treatment and grinding process in which compressed heated air and wet cheese material are separately introduced into an enclosure that includes a truncated conical shaped section. After introduction, the compressed heated air travels generally along a downward path through the enclosure until it reaches a lower end thereof. The air flows back up from the lower end of the enclosure in a central region thereof until exiting the enclosure via an exhaust duct. The wet cheese material is separately introduced into an upper end of the enclosure, and the cheese material becomes entrained in the heated air traveling downward through the enclosure until reaching the lower end of the enclosure.

During this movement of the cheese material from the upper end of the enclosure down to the lower end thereof, the cheese material is thermally and physically processed in mutually beneficial ways. The cheese material is dehydrated by the heated air in which it is suspended in a dynamic air flow system. During the same unit operation, the cheese material is disintegrated into small particles in an extremely short period of time. The outcome is that significant amounts of the introduced wet cheese material are dried and ground before reaching a lower end of the enclosure. No moving mechanical parts are needed for effecting grinding of the wet cheese material.

Consequently, in these embodiments, a solid particulate product including dried and ground cheese material is discharged and recovered from the lower end of the enclosure, while air and moisture vapor released from the material from drying is exhausted from the system via the exhaust duct. In one particular embodiment, the enclosure is a two-part structure including an upper cylindrical shaped enclosure in which the compressed heated air and wet cheese material are separately introduced, and the cylindrical enclosure adjoins and fluidly communicates with a lower enclosure having the truncated conical shape that includes the lower end of the overall structure from which the dried and ground cheese material is dispensed.

The single-stage process for drying and grinding of wet cheese material in a manner a single unit operation according to the preferred embodiments of this invention offers numerous advantages over conventional schemes for drying and granulating wet cheese material. The single-stage treatment makes it possible to produce a grated cheese material from wet cheese material at a relatively low temperature, in a short duration procedure. Drying and grinding processes are both achieved in a single-stage operation without impairing the desirable functional and flavor attributes of the cheese material, and without requiring different processes to be performed in different equipment. Additionally, the process can be operated in a continuous mode as the compressed heated air is continuously exhausted from the system after entraining the cheese material downward through the enclosure to its lower end, and ground cheese material can be withdrawn from the lower end of the enclosure in an air-tight manner, such as by using a rotary air-lock. Relatively little if any cheese material residue is left on the inner walls of the processing unit, making it easy to clean and facilitating switching to a different type of cheese material for processing within the unit. These advantages reduce process complexity, production time, and production and service costs.

The grated cheese product obtained may be used, for example, as an edible functional ingredient for food manufacture, such as process cheese manufacture. The dehydration of the cheese that can be imparted during the operation by dehydration of increase stability can be imparted during the grinding operation by using heated air can increase stability and preservability of the granular cheese product. Among other benefits, the partly dehydrated cheese product is more resistant to mold growth. The act of drying and grating brings the product to a more shelf-stable, storable ingredient form with numerous possible applications such as in cheese powders, process cheese, sauces, and so forth. For instance, it may be used as a shelf-stable food ingredient, such as a dry cheese mix ingredient, which may be reconstituted with water, or as a food additive or flavoring material.

### BRIEF DESCRIPTION OF THE DRAWINGS

Other features and advantages of the invention will become apparent from the following detailed description of preferred embodiments of the invention with reference to the drawings, in which:
FIG. 1 is a flow chart of a method for processing cheese material for use or re-use in food products according to an embodiment of this invention.
FIG. 2 is a schematic view of a system for processing wet cheese material according to an embodiment of this invention.
FIG. 3 is a cross sectional view, of the cyclone unit used in the processing system illustrated in FIG. 2.

The features depicted in the figures are not necessarily drawn to scale. Similarly numbered elements in different figures represent similar components unless indicated otherwise.

### DETAILED DESCRIPTION OF THE PREFERRED EMBODIMENTS

The present invention relates to a process for grinding cheese materials into grated form, and, in one embodiment, to a process for dehydrating and grinding high-moisture content or "wet" cheese during the same unit operation. The term "grated" means that small granules of the cheese are produced. The term "grated" does not mean that shreds of cheese are produced. "Shredded" cheese refers to elongated cheese pieces in the shapes of strings, strips, or cylinders, and the like. The invention will be described below with specific reference to unique single-stage processing of cheese materials. For purposes herein, the term "wet" as used to characterize a cheese or similar dairy product material refers to a material containing at least 14 wt.% total water content, in liquid, frozen and/or vapor form. The present invention also may be applied to grind lower-moisture content cheese materials.

In an embodiment, wet cheese material is subjected to drying and grinding into a small particle size within a short period of time in a single-stage process performed in one unit operation. The single-stage process is implemented on a cyclonic type system that may be operated in a manner whereby the wet cheese material may be thermally and physically acted upon at the same time within the same processing unit in a beneficial manner. A dried and ground cheese material is obtained in a flowable grated form (e.g., a solid fine particulate).

For purposes herein, "drying" means dehydrating, i.e., reducing moisture content; and "grinding" a particle means crushing, pulverizing, abrading, wearing, or rubbing the particle to break it down into smaller particles and/or liberate smaller particles, and includes mechanisms involving contact between moving particles, and/or between a moving particle and a static surface.

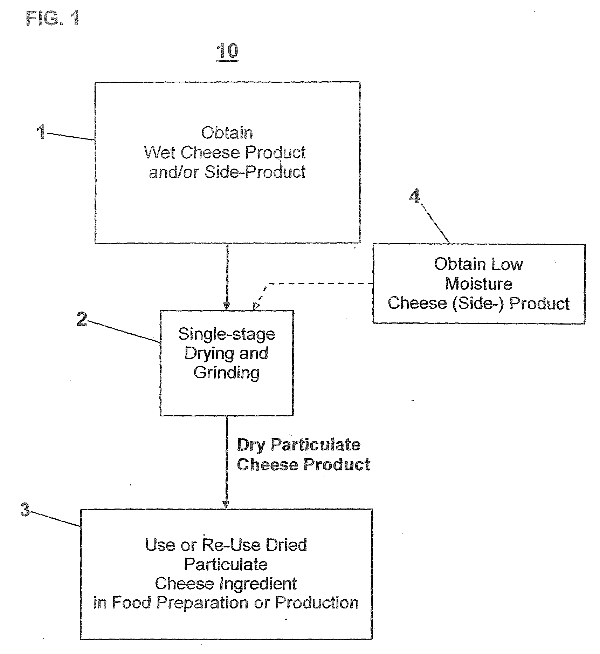

Referring to FIG. 1, in this illustrated embodiment wet cheese material is obtained as an original cheese product or as a side product collected in process or from finished cheese mmufacture (step **1**). The cheese is subjected to a single-stage drying and grinding treatment (step **2**). The resulting grated cheese material is made available as "rework" for use or re-use as a food component or ingredient (step **3**). Alternatively, a low-moisture cheese product or product may be obtained (step **4**), and subjected to a single-stage grinding treatment, and so on. Since the low-moisture cheese product or side product generally may not require dehydration to be granulated, the drying aspect of step **2** may be omitted for it as described in more detail below.

In step 2, a grated cheese material product is obtained which is suitable for use in comestibles. The grated cheese material obtained substantially retains its flavor and functional attributes through the single-stage treatment. The grated cheese product may be stably stored until used or re-used in food preparation or food production. The grated cheese product may be used as an ingredient in cheese production in which its flavor or functional attributes may be desirable or useful.

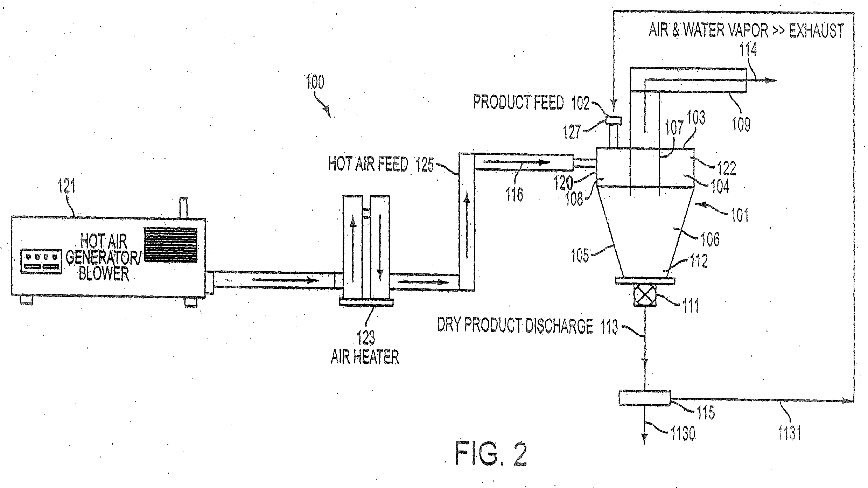

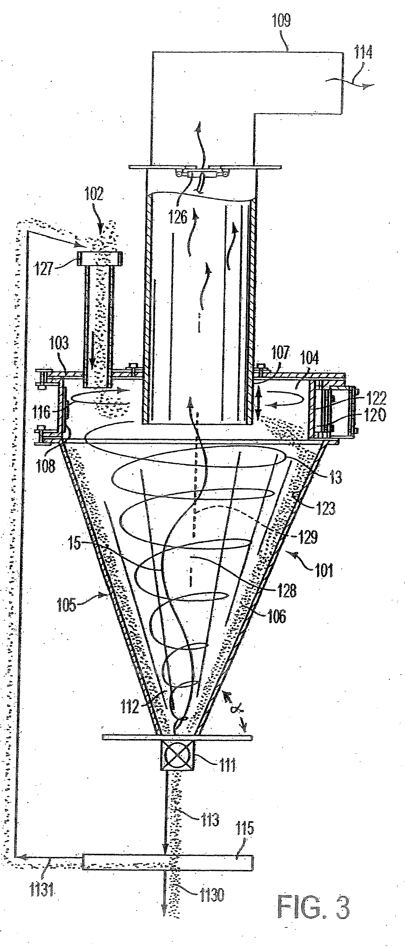

Referring now to FIGS. 2 and 3, details of an exemplary equipment arrangement and process of operating it for conducting the single-stage drying and grinding of the wet cheese material in step 2 of FIG. 1 is discussed hereinafter.

Referring to FIG. 2, an exemplary system **100** for performing single-stage drying and grinding of wet cheese material according to a process embodiment of this invention is shown. Cyclone **101** is a structural enclosure comprised of two fluidly communicating sections: an upper cylindrical enclosure **103** defining a chamber **104;** and a lower truncated conical shaped enclosure **105** that defines a cavity **106.** Both the upper and lower enclosures are annular structures in which a solid wall or shell encloses an interior space. In this illustration, the upper enclosure **103** has a generally uniform cross-sectional diameter, while the lower enclosure **105** tapers inward towards its lower end **112.** In a non-limiting embodiment, the taper angle α of lower enclosure **105** may range from about 66 to about 70 degrees. For purposes herein, the terminology "enclosure" means a structure that encloses a chamber, cavity, or space from more than one side.

Compressed heated air **116** and wet cheese material **102** are separately introduced into the cyclone **101** at the upper enclosure **103**. The processed wet cheese material is discharged as a solid particulate **113** from the lower end **112** of the cyclone **101**. A valve mechanism **111,** such as a rotary valve or rotary air-lock, is shown that permits extraction of dried, ground cheese material from the cyclone without interrupting continuous operation of the system and which minimizes leakage of the heated air from the cyclone **101.** If the cyclone **101** is operated without an air-lock or the like at the bottom discharge end of the cyclone **101,** the system may run less efficiently as heated air will be forced out of the lower end **112,** which may need to be compensated for in the air feed rate. Air, and moisture vapor released from the cheese material during heat treatment within the cyclone **101,** is exhausted as exhaust gases **114** from the cyclone via sleeve **107** and exhaust duct **109.** Some nominal amount of chaff may be liberated the cheese material during their processing in the cyclone and gets eliminated with the exhaust gas stream **114.** The exhaust gas stream **114** optionally may be particle filtered, and/or scrubbed to strip out sulfur-containing compounds or other compounds, such as using a separate scrubber module (not shown), e.g. a packed bed type scrubber, before it is vented to the atmosphere. Sieving device **115** is optional, and is described in more detail later herein. Generally, it can be used to redirect oversize or coarser product in particulate product **113** which may be re-introduced into the cyclone **101** for additional treatment by itself or in combination with fresh feedstock that has not yet been treated therein.

To introduce the compressed heated air **116** into cyclone **101,** an air pressurizing mechanism **121,** such as a blower or air compressor, generates a high volume, high velocity compressed air stream that is conducted via hot air ducting **125** through an air heater **123,** and from there is introduced into upper enclosure **103** of cyclone **101.** For purposes herein, the term "heated air" refers to air heated to a temperature above ambient temperature, e.g., above 75°F (24°C). The term "compressed air" refers to air compressed to a pressure above atmospheric pressure, e.g., above 14.7 psia (lb./inch² absolute). The term "compressed heat air" refers to air having both these characteristics. The compressed heated air **116** is introduced into chamber **104** substantially tangentially to an inner wall **108** of the upper enclosure **103.** This can be done, for example, by directing the heated air stream **116** to a plurality of holes **120** (e.g., 2 to 8 holes) circumferentially spaced around and provided through the wall **108** of the upper enclosure **103** through which the heated air stream is introduced. Deflection plates **122** can be mounted on inner wall **108** of upper enclosure **103** for deflecting the incoming stream of heated air into a direction substantially tangential to the inner wall **108** according to an arrangement that has been described, for example, in U.S. patent application publication no. 2002/0027173 A1, which descriptions are incorporated herein by reference. The heated air may be introduced into the upper enclosure **103** of cyclone **101** in a counter-clockwise or a clockwise direction.

The introduced air 10 generally may be pressurized cyclonically in the chamber **104** and cavity **106.** Due to the centrifugal forces present in the cyclonic environment, it is thought that the pressure nearer the outer extremities of the cavity **106** is substantially greater than atmospheric pressure, while the pressure nearer the central axis of the cavity **106** is less than atmospheric pressure. As shown in FIG. 3, as a non-limiting illustration, after being introduced into upper enclosure **103,** the compressed heated air **116** spirals or otherwise travels generally along a large downward path as a vortex 13 through the upper enclosure **103** and the lower conical shaped enclosure **105** until it reaches a lower end **112** thereof. In this illustration, near the lower end **112** of the cavity **106** defined by the inner walls **123** of lower enclosure **105,** the downward direction of the air movement is reversed, and the air (and moisture vapor released from the cheese material during heat treatment within the cyclone **101)** whirls back upwardly as a smaller vortex **15** generally inside the larger vortex **13.** The smaller vortex **15** flows back up from the lower end **112** of the lower enclosure 105 in a central region **128** located proximately near the central axis **129** of the cyclone **101** and generally inside the larger vortex **13.** The smaller vortex **15** flows upward until exiting the enclosure via sleeve **107** and then exhaust duct **109.**

A vortex breaking means (not shown) optionally can be interposed below or inside the lower **end 112** to encourage the transition of the larger vortex **13** to the smaller vortex **15.** Various vortex breaking arrangements for cyclones are known, such as the introduction of a box-shaped enclosure at the bottom of the conical enclosure.

The wet cheese material **102** is separately introduced into upper enclosure **103.** The introduced wet cheese material drops gravitationally downward into chamber **104** until they become entrained in the heated air vortex **13** within cyclone **101.** Preferably, the wet cheese material is introduced into upper enclosure **103** in an orientation such that they will fall into the cyclonic vortex **13** generated within cyclone **101,** where located in the space between the sleeve **107,** and inner wall **108** of the upper enclosure **103.** This feed technique serves to minimize the amount of wet cheese material that may initially fall into extreme inner or outer radial portions of the vortex where the cyclonic forces that the cheese material experiences may be lower.

The entrained cheese material travels in the vortex **13** of heated air that spirals or otherwise travels downward through the lower enclosure **105** until reaching the lower end **112** of the lower enclosure **105.** During this downward flow path, the cheese material is dehydrated by the heated air in which they are suspended in such a dynamic air-flow system. They also are ground during the downward flow path. The various dehydration and grinding effects on the cheese material may occur at respective times, and/or several of the effects may occur simultaneously at a particular point or points in time, during the downward flow path of the cheese material through the cyclone. While not desiring to be bound to any theory, it is thought that the possible pressure-gradient and coriolis forces across, cavitation explosions, and the collision interaction between the cheese material particles entrained in the high-velocity cyclonically pressurized may be violently disruptive to the physical structure of that cheese material. Alternatively, or in addition thereto, the centrifugal force of the vortex may move the cheese material forcefully against inner walls **108** and **123** of the enclosure. These modes of attrition, individually or in combination, or other modes of attrition that may occur within the cyclone which may not be fully understood, bring about comminuting (grinding) of the cheese material concurrent with drying it. As a result, during this movement of the cheese material from the upper enclosure **103** down to the lower end **112** of the lower enclosure **105,** the cheese material is thermally and physically processed in beneficial ways. The unit **101** requires no moving mechanical parts for effecting grinding of the wet cheese material.

In a further embodiment of the invention, the discharged solid particulate product **113** can be screened, such as using a sieve, such as a screen sieve or other suitable particulate separation/classifying mechanism **115,** to sort and separate the finer of ground cheese material **1130** in the solid particulate product **113** that have particle sizes meeting a size criterion, such as being less than a predetermined size, which are suitable for post-grinding processing, from the coarser product fraction **1131.** The coarser (oversize) product fraction **1131** can be redirected into the upper enclosure of the cyclone for additional processing therein. A conveyor (not shown) could be used to mechanically transport the coarser material back to feed introducing means **127** or other introduction means in upper enclosure **103** of cyclone **101.** Also, feed introducing means **127** may be an inclined conveyor (not shown), which transports cheese feed from a lower location up to and into chamber **104** of the cyclone **101** at the upper enclosure **103.**

It will be appreciated that sleeve **107 can** be controllably moved up and down to different vertical positions within cyclone **101.** In general, the lower sleeve **107** is spaced relative to the cavity **106,** the smaller the combined total volume of the cyclone **101** which is available for air circulation. Since the volume of air being introduced remains constant, this reduction in volume causes a faster flow of air, causing greater cyclonic effect throughout cavity **106** and consequently causing the cheese material to be ground to circulate longer in the chamber **104** and the cavity **106.** Raising the sleeve **107** generally has the opposite effect. For a given feed and operating conditions, the vertical position of sleeve **107** can be adjusted to improve process efficiency and yield.

Also, a damper **126** can be provided on exhaust duct **109** to control the volume of air permitted to escape from the central, low-pressure region of cavity **106** into the ambient atmosphere, which can affect the cyclonic velocities and force gradients within cyclone **101.**

By continually feeding cheese material into cyclone **101,** a continuous throughput of dried and ground cheese material **113** is obtained. A non-limiting example of a commercial apparatus that can be operated in a continuous manner while processing cheese material according to processes of this invention is a WINDHEXE apparatus, manufactured by Vortex Dehydration Systems, LLC, Hanover Maryland, U.S.A. Descriptions of that type of apparatus are set forth in U.S. patent application publication no. 2002/0027173 A1, which descriptions are incorporated in their entirety herein by reference.

The cyclonic system **100** provides very high heat transfer rates from hot air to cheese material for drying, and mechanical energy to crack and granulate cheese material as it descends through the conical section of the dryer. The cheese material exiting the cyclone **101** exhibits a flowable solid particulate type form, which may be a flour or powder like material. The one-stage process offers numerous advantages over conventional schemes used for powdering or grating wet cheese material using separate drying and grinding processes and equipment.

In one process scheme for processing wet cheese material, the introduction of the heated air into the cyclone comprises supplying compressed heated air at an inlet pressure within the range of from about 10 psig to about 100 psig, particularly from about 15 psig to about 60 psig. The heated air generally is introduced into the cyclone at a temperature within the range of about 120°F to about 900°F, particularly about 300°F to about 500°F, more particularly about 325°F to about 400°F. In one aspect, the inlet air temperature does not exceed 250 °F. The volumetric introduction rate of the heated air into the cyclone is within the range of from about 500 cubic feet per minute to about 10,000 cubic feet per minute, particularly from about 1,500 cubic feet per minute to about 3,000 cubic feet per minute. The feed rate of the wet cheese material can vary, but generally may be in the range of about 1 to about 300 pounds per minute, particularly about 50 to about 150 pounds per minute, for about a 1 to about a 10 foot diameter (maximum) cyclone. The cyclone diameter may be, for example, from about 1 to about 10 feet diameter, particularly about 1 to about 6 feet in diameter.

The wet cheese material may be processed within the above-noted cyclone arrangement within a very short period of time. In one embodiment, upon introducing the wet cheese material into the cyclone, a dried and grated product thereof is discharged from the processing unit within about 15 seconds, and particularly within about 1 to about 5 seconds. After exiting the cyclone unit, any volatile components in the exhaust also optionally may be handled by conducting the cyclone exhaust through a scrubber unit and the like (not shown).

Substantially all the introduced wet cheese material may be discharged as processed product within such a short period of time. The above-noted processing temperatures and durations applied during drying and grinding of the wet cheese material generally are low enough to help prevent any significant undesired changes in the protein structure, or other physico-chemical attributes relevant to food-processing, from occurring during the single-stage drying and grinding treatment such as described herein. The protein content is preserved substantially intact through the drying and grinding of the wet cheese material.

Generally, the cheese material used as the feed material contains about 6 wt% to about 99 wt.% moisture (i.e., water in liquid, frozen and/or vapor form). In one embodiment, the cheese material used as the feed material of a single-stage grinding process generally contains at least about 14 wt.% moisture, particularly about 14 wt.% to about 99 wt.%, and more particularly about 14 wt.% to about 65 wt.% moisture, when introduced into the cyclone **101** of system **100.** The cheese material that can be used as the feed material can be derived from commercial cheese manufacture or other sources of cheese material. The ground (grated) cheese material obtained from the process generally contains about 1 wt.% to about 40 wt.% moisture, particularly about 1 to about 25 wt.%, and more particularly about 1 wt.% to about 13 wt%.

Ground cheese material obtained by a single-stage drying and grinding process preferably has commercially useful particle sizes. In one embodiment, the dried, ground (grated) cheese product obtained by processing high-moisture or low-moisture content cheese material according to an embodiment of this invention may have an average particle size ranging from about 1 to about 1,000 microns, particularly about 2 to about 1,000 particularly about 10 to about 400 microns, and even more particularly about 2 to about 50 microns. In one embodiment, the solid particulate product obtained as the bottoms of the cyclone comprise at least about 50% ground cheese material having an average particle size of about 1 micron to about 1,000 microns.

The grated cheese obtained for processing may be derived, for example, from natural or process cheeses. Natural cheeses include ripened natural cheese and unripened natural cheese. "Natural" cheese is made directly from milk by coagulating or curdling milk, stirring and heating the curd, draining off the whey, and collecting or pressing the curd. Desirable flavor and texture are obtained in many cheeses by curing the cheese, that is, holding it for a specified time, at a specified temperature and humidity. This basic method is used to produce a very large number of different types of cheese by altering time, temperature, pH, curd handling and other variables.

"Process cheese" generally refers to any of various types of natural cheese and mixing such ground cheese with added emulsifier and heating until a uniform plastic cheese mass is obtained. The process cheeses include pasteurized process cheeses.

The cheese material which may be subjected to processing is not particularly limited. It may be, for example, process cheese such as American process cheese; very hard cheese such as Parmesan, Romano, Sapsago, Spalen, Asiago; Hard cheese such as Cheddar, Caciocavallo, Swiss, Colby, Edam, Gouda, Emmentaler, Gruyere, granular-curd, stirred-curd; Semisoft cheese such as Monterey Jack, brick, mozzarella, Blue, feta, Havarti, Muenster, provolone, Roquefort, Gorgonzola, Stilton, Wensley-dale; Soft cheese such as Brie, Camembert, Neufchatel, Ricotta, cottage, cream cheese, and mixtures thereof.

In one preferred embodiment, the single unit process is useful to transform fragments, chunks and/or relatively large pieces of hard or very hard cheeses having high-moisture content into a dry flowable powder form in a single stage operation. In one embodiment, the cheese pieces fed into the cyclonic processor for conversion into granular form have a moisture content of at least about 14 wt.% or more.

The grated cheese product obtained is suitable, for example, for use as an edible, functional ingredient in food manufacture, such as process cheese production. In one embodiment, the grated cheese material is used as a unique functional ingredient in lieu of part or all of typically used cheese or substitute cheese ingredients suitable for process cheese making. For example, in the manufacture of process cheese, the grated cheese product may be used as part or all of the cheese source used in preparing a cheese blend. For example the grated cheese, alone or in combination with other type of cheese sources, may be blended with an emulsifier in an aqueous environment and heated to form a homogenous molten mass that can be shaped, cooled, and cut into desired sizes.

The grated cheese product also may be used as a shelf-stable food ingredient, such as a dry cheese mix ingredient which may be reconstituted with water. It also may be used as a shelf-stable flavoring material or food additive.

The weights of the chunks or pieces of cheese that may dried and substantially completely ground into a powder form in a single unit operation is relatively broad. In one embodiment, the cheese material used as feed comprises discrete, self-supporting pieces of cheese having an average weight of about 1 g or more, and particularly about 5g to about 40g.

In another embodiment, cheese having a moisture content more than 14 wt.% may be processed in the cyclone using compressed ambient air or otherwise unheated air, although the granular cheese product discharged from the cyclone may need to be further dehydrated as part of a separate additional process step to ensure adequate shelf-stability is provided. In general, it is preferred to provide a moisture content in the granular cheese product which is less than about 25 wt.%, and preferably less than about 14 wt. % to further ensure that a shelf-stable product is attained. The invention also is applicable to cheese materials having a moisture content less than 14 wt.%, where cheese grinding generally will be the predominant process treatment, although some dehydration also may be induced as well. If the cheese starting material contains less than about 14 wt.%moisture, if may be possible to operate the cyclonic processor at a reduced heated air temperature or without the need to heat the compressed air to an elevated temperature before its introduction into the cyclone. If unheated air or only mildly heated air is used (e.g., an air temperature of less than about 120°F), it may be desirable to dehumidify the compressed air before it is introduced into the cyclone unit in high relative humidity (RH) conditions (e.g., RH greater than about 70%) to ensure that the cheese material can be attrited into granular form and does not become sticky or pasty inside the cyclone during processing. The air may be dehumidified using a conventional cooling coil unit or similar device used for dehumidification of process air.

The grated cheese material obtained by the single-stage process treatment is edible and may be used in a wide variety of foodstuffs for a variety of purposes. The grated cheese material retains the essential cheese flavoring attributes and does not have an unpleasant taste or odor. The grated cheese material has ability to contribute flavor and function without adversely impacting food products into which it may be incorporated. The grated cheese material obtained is shelf stable, and may be used to impart flavor and/or functional properties to a cheese material being manufactured after many months of storage of the grated cheese material, such as up to about twelve months storage/shelf life or more.

The single-stage processing unit is left relatively clean and tidy because the cheese material does not tend to leave residues on the inner surfaces of the process unit. This clean and tidy operation can facilitate any desired change-over for processing a different type of feed material within the same unit. For instance, the type of wet cheese material run through the system may be changed without the need to clean the system interior of residues of a prior treatment conducted therein on a different type of food material.

The Examples that follow are intended to illustrate, and not limit, the invention. All percentages are by weight, unless indicated otherwise.

### EXAMPLES

### Example 1 :

Kraft® Natural Shredded Cheese (36 wt.% moisture), a commercially available product, was fed into a WINDHEXE apparatus for circular vortex air-flow material grinding. The WINDHEXE apparatus was manufactured by Vortex Dehydration Systems, LLC, Hanover, Maryland, U.S.A. The basic configuration of that type of apparatus is described in U.S. patent application publication no. 2002/0027173 A1, and reference is made thereto. The process unit had four inlet ports equidistantly spaced around the portion of the apparatus through which the compressed air stream was concurrently introduced in a counter-clockwise direction.

A two-foot diameter WINDHEXE apparatus was tested. The diameter size refers to the chamber size of the enclosure into which air and dual-density cheese material introductions were made. The conditions of this experiment are described below. The feed rate of the cheese material was set for an approximate discharge of 3 pounds solid product per minute, and approximately 20 pounds of cheese material was tested in the apparatus The cheese material was loaded into a hopper that directly fed onto a three-inch belt conveyor that fed into the WINDHEXE apparatus. Testing was performed in the two-foot diameter WINDHEXE apparatus with unheated compressed air introduced at 65-75°F, an air introduction rate of 2,500 cubic feet per minute (cfm) and pressure of 40-50 psig.

A cheese material exiting the apparatus included grated cheese in finely ground form. This grated cheese material was discharged from the bottom of the cyclone in about two seconds after the cheese had been introduced into the processing unit. The grated cheese obtained had an average particle size of about 5 to about 50 microns, and a moisture content of about 35%. The reclaimed cheese was flavorful, and retained flavor well through the treatment. It was functionally suitable for use as a food ingredient in cheese production. Additional studies have shown that feed rate and air temperature variation may be used to control the base cake granulation and moisture content.

### Example 2:

The experiment of Example 1 was repeated except that aged Parmesan cheese in shredded form was used instead as the feed cheese. The Parmesan cheese had an initial moisture content of about 30%. The aged Parmesan cheese was commercially available Parmesan cheese manufactured by Kraft Foods Holdings Inc. (Tulare, CA). Upon processing the Parmesan cheese shreds in the cyclone unit, a dry-grated product was rapidly obtained within a few seconds after being fed into the unit having a moisture level of 21-24%. The cheese product was flavorful, shelf stable, and retained flavor well through the treatment. It was functionally suitable for use as a food ingredient in cheese production.

White the invention has been particularly with specific reference to particular process and product embodiments, it will be appreciated that various alterations, modifications and adaptations may be based on e present disclosure, and are intended to be within the spirit and scope of the present invention as defined by the following claims.

## Claims

1. A cheese grating process, comprising:
introducing compressed air into an enclosure that includes a truncated conical shaped section, wherein the air travels generally along a downward path through the enclosure, including the conical section, to a lower end thereof, and the air reaching the lower end flows back up and exits the enclosure via an exhaust outlet;
introducing into the enclosure cheese material which is entrained in the air traveling downward through the enclosure, wherein at least a portion of the cheese material is ground before reaching the lower end of the enclosure;
discharging a grated product comprising ground cheese material from the lower end of the enclosure.

2. The process of Claim I, wherein the cheese material contains at least about 14 wt.% moisture as introduced into the enclosure.

3. The process of Claim 1 or 2, wherein the cheese material contains about 14wt.% to about 65 wt.% moisture as introduced into the enclosure; and the dried and ground cheese material contains about I wt.% to about 40 wt.% moisture.

4. The process of any one of Claims 1 to 3, wherein the grated product has an average particle size of about 10 micron to about 400 microns.

5. The process of any one of Claims 1 to 4, wherein the cheese material comprises cheese pieces having an average mass per piece of at least about 1g.

6. The process of any one of Claims 1 to 5, wherein the cheese material comprises cheese pieces having an average mass per piece of about 5g to about 40g.

7. The process of any one of Claims 1 to 6, wherein the grated product comprises at least about 50% grated product having an average particle size of about 1 micron to about 1,000 microns.

8. The process of any one of Claims 1 to 7, wherein the cheese material is selected from the group consisting of process, Parmesan, Romano, Sapsago, Spalen, Asiago, Chedder, Caciocavallo, Swiss, Colby, Edam, Gouda, Emmentaler, Gruyere, granular-curd, stirred-curd, Monterey Jack, brick, mozzarella, Blue, feta, Havarti, Muenster, provolone, Roquefort, Gorgonzola, Stilton, Wensley-dale, Brie, Camembert, Neufchatel, Ricotta, cottage, cream cheese, and mixtures thereof.

9. The process of any one of Claims 1 to 8, wherein the introducing of the air comprises supplying compressed air at a pressure within the range of from about 10 psig to about 100 psig.

10. The process of any one of Claims 1 to 9, wherein the introducing of the air comprises supplying compressed air at a pressure within the range of from about 15 psig to about 60 psig.

11. The process of any one of Claims 1 to 10, wherein the introducing of the air comprises supplying heated air at a temperature within the range of about 120°F to about 900°F.

12. The process of any one of Claims 1 to 11, wherein the introducing of the air comprises supplying heated air at a temperature within the range of about 325°F to about 400°F.

13. The process of any one of Claims 1 to 12, wherein the introducing of the air comprises supplying the heated air at a rate of within the range of from about 500 cubic feet per minute to about 10,000 cubic feet per minute.

14. The process of any one of Claims 1 to 13, wherein the introducing of the air comprises supplying the heated air at a rate of within the range of from about 1,500 cubic feet per minute to about 3,000 cubic feet per minute.

15. The process of any one of Claims 1 to 14, wherein the lower end of the enclosure communicates with a rotary valve permitting discharge of solid particulate product from the enclosure in a substantially air-tight manner.

16. The process of any one of Claims 1 to 15, further comprising exhausting moisture vapor released from the wet cheese material via the exhaust outlet.

17. The process of any one of Claims 1 to 16, wherein the introducing of the air into the upper cylindrical enclosure occurs in a direction oriented generally tangentially to inner walls of the cylindrical enclosure.

18. The process of any one of Claims 1 to 17, wherein the upper cylindrical enclosure has a substantially constant diameter of about 1 to about 10 feet, and the lower enclosure comprises a truncated conical shape having a maximum diameter size where the lower enclosure adjoins the cylindrical enclosure and the maximum diameter of the lower enclosure is substantially the same as the diameter of the cylindrical enclosure.

19. A grated cheese material prepared from cheese material in a method comprising introducing compressed air into an enclosure that includes a truncated conical shaped section, wherein the heated travels generally along a downward path through the enclosure, including the conical section, to a lower end thereof, and the air reaching the lower end flows back up and exits the enclosure via an exhaust outlet; introducing into the enclosure cheese material which is entrained in the air traveling downward through the enclosure, wherein at least a portion of the cheese material is ground before reaching the lower end of the enclosure; and discharging from the lower end of the enclosure a grated product comprising dried and ground cheese material.

20. The grated cheese material of Claim 19, wherein the cheese material is selected from the group consisting of process, Parmesan, Romano, Sapsago, Spalen, Asiago, Cheddar, Caciocavallo, Swiss, Colby, Edam, Gouda, Emmentaler, Gruyere, granular-curd, stirred-curd, Monterey Jack, brick, mozzarella, Blue, feta, Havarti, Muenster, provolone, Roquefort, Gorgonzola, Stilton, Wensley-dale, Brie, Camembert, Neufchatel, Ricotta, cottage, cream cheese, and thereof.

21. The grated cheese material of Claim 19 or 20, wherein grated product contains about 1 wt.% to about 25 wt.% moisture.

22. The grated cheese of any one of Claims 19 to 21, wherein the product has an average particle size of about 1 micron to about 1,000 microns.

23. Process for making a cheese composition, comprising:
a) preparing a cheese blend comprising cheese and an emulsifier, wherein the cheese comprises grated cheese prepared by introducing air into an enclosure that a truncated conical shaped section, wherein the air travels generally along a downward path through the enclosure, including the conical section, to a lower end thereof, and the heated air reaching the lower end flows back up and exits the enclosure via an exhaust outlet, and introducing into the enclosure cheese material which is entrained in the air traveling downward through the enclosure, wherein at least a portion of the cheese material is ground before reaching the lower end of the enclosure; and discharging from the lower end of the enclosure a granular product comprising the grated cheese;
b) heating the cheese blend to a temperature sufficient to form a homogenous molten mass;
c) cooling the heated cheese blend to form a cheese composition.
